# FASCICULE DE BREVET EUROPEEN

(11) **EP 0 751 040 B1**
(45) Date de publication et mention de la délivrance du brevet: **09.08.2000**
(21) Numéro de dépôt: 96401399.9
(22) Date de dépôt: 25.06.1996
(51) Int. Cl.: B60Q 1/04, B60Q 1/26

(54) **Feu de signalisation à moyens de montage perfectionnés pour véhicule automobile**
Verbesserte Befestigungseinrichtung für Signalleuchte eines Fahrzeuges
Improved device for mounting a vehicle signalling light

(30) Priorité: 27.06.1995 FR 9507720
(43) Date de publication de la demande: 02.01.1997
(73) Titulaire: VALEO VISION, 93000 Bobigny (FR)
(72) Inventeur: Garric, Michel, 81290 Escoussens (FR); Perpey, Christian, 81100 Castres (FR)
(74) Mandataire: Le Forestier, Eric

(56) Documents cités:
- FR-A- 894 131
- FR-A- 899 047
- FR-A- 1 605 006
- US-A- 4 356 539

## Description

La présente invention concerne d'une façon générale les feux de signalisation de véhicules automobiles.

Elle concerne plus précisément le montage d'un feu dans une ouverture d'une partie du véhicule, avec des contraintes d'accostage ou d'étanchéité sur les parois délimitant cette ouverture.

Un problème posé avec ce type de montage réside en ce que, pour des raisons notamment d'imprécisions ou de tolérance de fabrication, l'accostage ou l'étanchéité entre le feu et les bords de l'ouverture peuvent être mal assurés lorsque le feu lui-même et la paroi dans laquelle est pratiquée l'ouverture sont rigides.

Ainsi, pour être certain d'assurer correctement cet accostage ou cette étanchéité, sans forcer sur les pièces, la fixation du feu (typiquement par vissage postérieur avec un écrou autofreiné) doit s'effectuer au jugé, sans qu'il n'existe de butée franche de vissage. En conséquence, lors de réparations, il existe un risque important d'exercer un couple de serrage excessif et de casser le feu ou le cas échéant la paroi dans laquelle est formée l'ouverture.

On connaît certes par FR-A-899 047 un projecteur comportant un moyen élastique par l'intermédiaire duquel on assure la fixation d'un projecteur dans une parmi plusieurs positions.

On observera tout d'abord que, face au problème exposé plus haut, rien de suggèrerait à l'homme du métier de rechercher une solution dans le domaine de la fixation réglable des projecteurs, étant donné qu'un feu de signalisation est par nature monté de façon fixe.

Mais surtout, le dispositif enseigné par ce document, ne comportant pas de moyens formant butée de vissage, n'empêche pas d'appliquer des sollicitations excessives au projecteur, en particulier lorsque les spires du ressort viennent en appui les unes contre les autres. Ainsi, c'est ici encore "au jugé" que l'opérateur devra effectuer le montage sans risquer de détériorer le projecteur ou sa fixation. Ainsi il serait hors de question d'utiliser ce dispositif connu, tel quel, dans des feux de signalisation modernes, à boîtier plastique, qui sont plus fragiles que les projecteurs en tôle des années 1940.

La présente invention vise à résoudre l'inconvénient précité dans le domaine propre des feux de signalisation, et à proposer un feu de signalisation dont la fixation puisse être assurée avec une butée de vissage sans encourir le risque d'impartir au feu et/ou à la paroi des contraintes excessives susceptibles de les détériorer voire de les casser.

Ainsi la présente invention concerne un feu de signalisation pour véhicule automobile tel que défini dans la revendication 1.

Des aspects préférés, mais non limitatifs, du feu de signalisation de la présente invention sont définis dans les revendications dépendantes 2 à 13.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue en coupe verticale axiale d'un feu de signalisation selon une première forme de réalisation de l'invention,
la figure 2 est une vue en coupe axiale d'une pièce du feu de signalisation de la figure 1,
la figure 3 est une vue en bout de la pièce de la figure 2,
la figure 4 est une vue en coupe verticale axiale d'un feu de signalisation selon une deuxième forme de réalisation de l'invention,
la figure 5 est une vue en coupe horizontale axiale du feu de signalisation de la figure 4,
la figure 6 est une vue en plan d'un détail de réalisation du feu des figures 4 et 5,
la figure 7 est une vue en coupe selon la ligne VII-VII de la figure 6,
la figure 8 est une vue en coupe selon la ligne VIII-VIII de la figure 6,
la figure 9 est une vue schématique en coupe d'une variante d'exécution de la deuxième forme de réalisation,
les figures 10a et 10b sont des vues schématiques en coupe d'une autre forme de réalisation de l'invention, et
la figure 11 est une vue en coupe d'une autre variante d'exécution de la deuxième forme de réalisation.

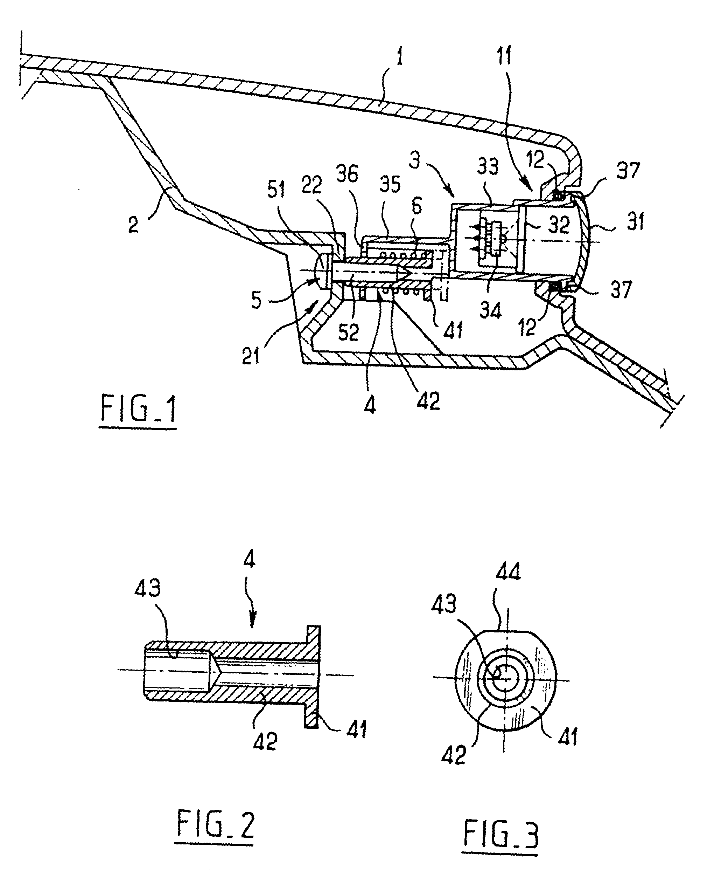

En référence tout d'abord aux figures 1 à 3, on a représenté un volet arrière d'un véhicule qui comprend une peau 1 définissant avec une doublure 2 une cavité dans laquelle est placé un feu de signalisation. La peau 1 comporte une grande paroi généralement horizontale ou légèrement oblique et une petite paroi verticale dirigée vers l'arrière du véhicule et dans laquelle est formée une ouverture 11 entourée par des bords définissant un appui pour un élément d'étanchéité 12 du genre joint en mousse ou en silicone.

Le feu de signalisation, qui est en l'espèce un feu stop arrière additionnel, surélevé ou au-dessous de la lunette arrière, est globalement désigné par la référence 3. Il comprend un socle 33 ouvert vers l'arrière (vers la droite sur la figure 1) et abritant une ou plusieurs sources lumineuses 34, en l'espèce une série de diodes électroluminescentes, et une plaque d'optique 32 disposée entre les sources et l'ouverture du socle. Cette ouverture est couverte par un voyant de fermeture 31 et est entourée par une collerette sur laquelle les bords rentrants du voyant viennent prendre appui.

Cette collerette sert également, lorsque le feu est mis en place, à comprimer l'élément d'étanchéité 12 entre ladite collerette et le bord de l'ouverture 11 formée dans la peau 1, comme illustré.

Le socle est prolongé vers l'intérieur du véhicule (vers la gauche sur la figure 1) par une membrure comportant une partie horizontale 35 et une partie verticale descendante 36 dans laquelle est formée une ouverture circulaire.

Au droit de cette partie 36, la doublure du véhicule possède un renfoncement 21 dont une paroi de fond 22 présente une ouverture alignée sur l'ouverture de la partie 36.

Une vis de montage du feu globalement indiquée en 5 possède une tête large 51 et une tige filetée 52.

Cette tige filetée est engagée par vissage dans un élément formant canon de vissage, globalement désigné par la référence 4 et représenté plus en détail sur les figures 2 et 3. Cet élément comprend un fût cylindrique 42 et à une extrémité du fût, une collerette radiale 41 dans la partie supérieure de laquelle est formé un méplat 44. Dans une région d'entrée du fût opposée à la collerette est formé un taraudage intérieur 43 recevant la tige filetée 52 de la vis.

Le diamètre externe du fût 42 est légèrement inférieur au diamètre intérieur de l'ouverture formée dans la partie 36 solidaire du socle, de manière à pouvoir coulisser dans cette ouverture dans laquelle il est engagé, tandis qu'il est supérieur au diamètre intérieur de l'ouverture formée dans la paroi 22 de la doublure.

Par ailleurs, un ressort de compression 6 est prisonnier entre la collerette 41 du canon 4 et la partie de membrure 36 solidaire du socle.

On observera en outre que le méplat 44 de la collerette 41 de l'élément 4 coopère avec la face inférieure de la partie de membrure 35 pour empêcher la rotation dudit élément sur lui-même.

Le feu de signalisation décrit ci-dessus est monté par l'extérieur de la peau 1, par un mouvement de translation vers l'intérieur (vers la gauche sur la figure 1), l'élément d'étanchéité 12 étant préalablement mis en place.

Une fois que la partie dans laquelle est monté le canon 4 a été amenée au droit de l'ouverture prévue dans la paroi de fond 22 de la doublure 2, la vis est engagée dans le canon 4 bloqué contre toute rotation à partir de l'intérieur du véhicule. Une butée franche de vissage est définie lors de la venue en appui de l'extrémité du canon opposée à sa collerette contre la face de la paroi 22 qui se trouve en vis-à-vis, et par la venue en appui de la tête de vis 51 contre la paroi 22.

La sollicitation par le serrage de la vis est transmise au socle du feu seulement par l'intermédiaire du ressort, ce qui permet d'éviter d'appliquer au feu, dans sa région d'appui sur la peau 1, des contraintes excessives. Ainsi la collerette 37 est plaquée contre la peau, via l'élément d'étanchéité, avec une force qui reste toujours inférieure à une limite fixée par les caractéristiques d'élasticité du ressort 6. De la sorte, les variations de dimensions, de forme et de planéité au niveau de la peau 1 et du socle du feu 3 ne risquent pas d'induire, par un serrage excessif, de rupture ou de détérioration de ces éléments. En outre, les variations dimensionnelles susceptibles d'exister entre la peau 1 au niveau de son ouverture et la doublure 2 au niveau de son renfoncement 21 sont absorbées.

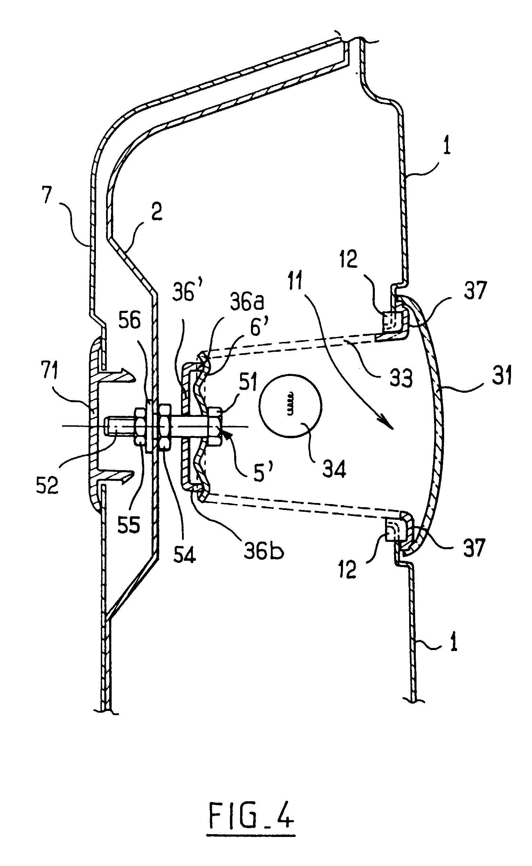

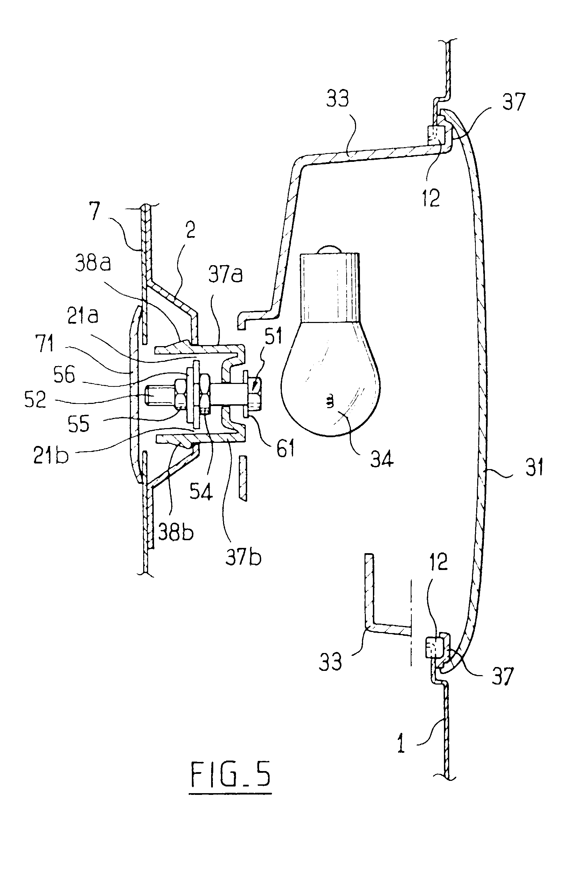

Maintenant en référence aux figures 4 et 5, on va décrire une seconde forme de réalisation de la présente invention. Les mêmes éléments ou parties y sont désignés dans la mesure du possible par les mêmes signes de référence et ne seront pas tous décrits à nouveau, seules les différences importantes par rapport à la première forme de réalisation ci-dessus étant décrites.

Tout d'abord, ce feu comporte à titre de source lumineuse une lampe à incandescence 34. Le socle 33 se termine, au niveau de son ouverture, par un rebord extérieur courbe qui reçoit à l'extérieur le bord du voyant 31 et qui vient coiffer par l'extérieur un joint d'étanchéité souple 12 analogue à celui de la figure 1.

La doublure 2 est bordée par un habillage 7, ces deux éléments étant sensiblement espacés l'un de l'autre à l'arrière (vers la gauche sur les figures) du feu.

Selon cette forme de réalisation, la partie postérieure du socle 33 comporte une partie 36' définissant un canal transversal délimité à ses deux extrémités longitudinales par un rebord, respectivement 36a, 36b, ce canal abritant une lame-ressort sinueuse 6' percée d'un trou central recevant une vis 5' pourvue d'une tête 51 côté intérieur du feu et d'une tige filetée 52 en saillie vers l'arrière du feu. Cette tige 52 traverse une autre ouverture formée dans la doublure 2, un écrou 55 avec une rondelle 56 et un contre-écrou 54 permettant d'assurer la fixation du feu.

Dans cette forme de réalisation également, l'effort de serrage appliqué au niveau de l'écrou 55 est transmis au feu par l'intermédiaire de la lame-ressort 6', ce qui permet de limiter les contraintes, tandis que le contre-écrou 54 définit une butée franche de vissage de l'écrou 55.

On observera également que le socle du feu comporte, en saillie vers l'arrière, deux pattes flexibles 37a, 37b (figure 5) pourvues à leur extrémité libre de dents d'accrochage 38a, 38b qui sont engagées dans des ouvertures 21a, 21b formées dans la doublure 2, pour assurer un prépositionnement et/ou un prémaintien du feu avant vissage.

On observera en outre que la position du contre-écrou 54 est choisie de manière à ajuster de façon optimale la sollicitation transmise au feu par la lame-ressort, cette sollicitation étant déterminée notamment en fonction de la nature et des dimensions du joint 12 et des écarts dimensionnels auxquels on peut s'attendre.

Enfin il est prévu dans cette forme de réalisation, dans l'habillage 7, une ouverture d'accès à l'écrou 55 qui, après montage, est fermée par un couvercle clipsé 71.

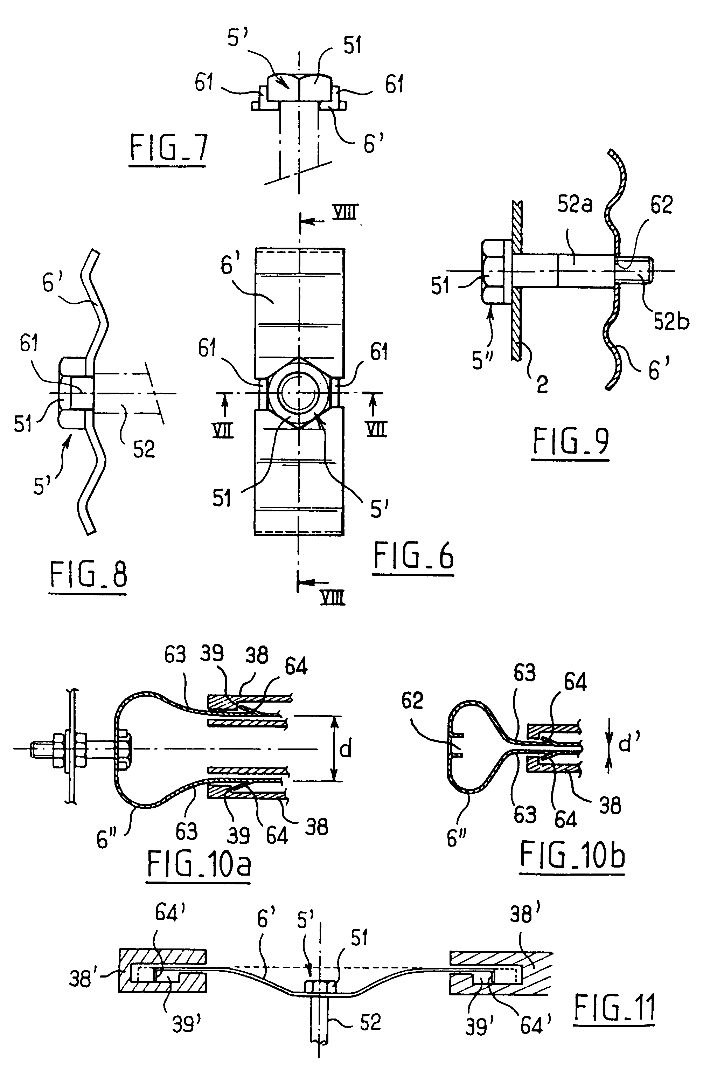

En référence aux figures 6 à 8, on a représenté en détail la lame ressort 6'. On observe qu'elle comporte au voisinage du trou pour la vis 5' deux ailes repliées à 90° par rapport à son plan général et dont l'espacement 61 est tel qu'elles empêchent le rotation de la tête de vis 51. Il en résulte que les écrous 54 et 55 peuvent être vissés sans avoir à bloquer par d'autres moyens la rotation de la vis.

En référence maintenant à la figure 9, on a représenté une variante de réalisation de cette seconde forme de réalisation de l'invention, selon laquelle la vis 5" comprend une tête 51, une première partie filetée 52a adjacente à la tête et une seconde partie filetée 52b, de plus petit diamètre, à son extrémité libre.

La première partie filetée 52a coopère avec un taraudage formé directement dans l'ouverture prévue dans la paroi 2, tandis que la seconde partie filetée 52b coopère avec un taraudage ou avec un poinçonnage formé dans la lame-ressort 6'. Ainsi la partie 52a définit la butée de fin de vissage, lorsque la tête 51 vient en appui contre la paroi 2, tandis que la partie 52b assure la sollicitation de la lame-ressort 6' par la vis 5".

Selon une autre variante illustrée sur la figure 11, on peut prévoir des moyens pour autoriser un débattement de la lame-ressort 6' par rapport aux aménagements de retenue prévus solidairement au socle du feu.

Ces moyens comprennent en l'espèce un pliage à environ 90° des extrémités libres 64' de la lame, qui sont ainsi emprisonnées dans des cavités 39' formées dans des aménagements 38' solidaires du socle tout en pouvant se déplacer dans ces cavités sur une certaine distance.

De la sorte, la tension apparaissant dans la lame-ressort lors du vissage, qui tend à modifier la distance entre les extrémités libres de ladite lame-ressort, ne vient pas appliquer de sollicitations exagérées au socle du feu.

En référence maintenant aux figures 10a et 10b, on a représenté schématiquement une autre forme de réalisation de l'invention, dans laquelle la lame-ressort 6" présente la forme générale d'une lyre, avec deux branches 63 généralement parallèles dont l'écartement mutuel peut varier.

Chacune de ces branches est pourvue à son extrémité libre d'une dent d'accrochage 64 apte à coopérer avec un décrochement 39 formé sur un aménagement respectif 38 solidaire du socle et prévu à un emplacement approprié.

Comme le montre la figure 10b, la distance entre les deux branches 63 peut varier grâce à l'élasticité de la lame-ressort, pour s'adapter à différentes configurations de socle. Ainsi, sur la figure 10b, les extrémités des deux branches sont engagées dans une cavité unique à deux décrochements formée dans un aménagement 38 du socle qui est différent de celui de la figure 10a.

Bien entendu, la présente invention n'est nullement limitée aux formes de réalisation décrites et représentées.

En particulier, le feu selon la présente invention peut être installé sur un volet arrière, mais également sur toute partie fixe du véhicule.

## Revendications

1. Feu de signalisation (3) pour véhicule automobile, du type comprenant
- un socle (33) abritant une source lumineuse (34) et fermé par un voyant (31), le feu prenant appui par un rebord (37) contre le bord d'une ouverture formée dans une paroi rigide (1) du véhicule et
- un moyen de fixation par vissage (5,4; 5',54,55) agissant au niveau du socle (33) pour presser ledit rebord contre ledit bord, et
- un moyen élastique (6;6') opérant entre le moyen de fixation par vissage et le socle pour limiter les sollicitations transmises au feu
*caractérisé en ce que*
le moyen de fixation par vissage comprend un moyen (4;54) formant butée de vissage pour empêcher l'application de sollicitations excessives au feu lors du vissage du moyen de fixation.

2. Feu de signalisation selon la revendication 1, caractérisé en ce qu'un joint d'étanchéité (12) est interposé entre le bord de l'ouverture et le rebord du feu.

3. Feu de signalisation selon l'une des revendications 1 et 2, caractérisé en ce qu'il comprend des moyens (37a, 37b) de prépositionnement et/ou de prémaintien du feu avant mise en oeuvre du moyen de vissage.

4. Feu de signalisation selon l'une des revendications 1 à 3, caractérisé en ce que le moyen de fixation par vissage comprend une vis (5) et un canon taraudé (4) situés de part et d'autre d'une autre paroi (22) du véhicule, la vis traversant une ouverture formée dans ladite autre paroi, en ce que ledit canon (4) forme butée de vissage et en ce que le moyen élastique est formé par un ressort de compression (6) interposé entre une première zone d'appui (41) formée sur le canon et une deuxième zone d'appui (36) solidaire du socle (33) du feu.

5. Feu de signalisation selon la revendication 4, caractérisé en ce que le socle comprend d'un seul tenant un prolongement dont une première partie (35) coopère avec le canon (4) pour empêcher sa rotation et dont une seconde partie (36) forme ladite deuxième zone d'appui.

6. Feu de signalisation selon l'une des revendications 4 et 5, caractérisé en ce que ladite première zone d'appui du ressort (6) est formée par une collerette (41) d'un seul tenant avec le canon (4), le ressort étant disposé autour du canon.

7. Feu de signalisation selon l'une des revendications 1 à 3, caractérisé en ce que le moyen élastique est formé par une lame-ressort allongée (6') traversée par la vis (5') dans une partie centrale et en appui contre le socle dans des parties d'extrémité.

8. Feu de signalisation selon la revendication 7, caractérisé en ce que les parties d'extrémité de la lame-ressort possèdent des moyens d'accrochage sur le socle.

9. Feu de signalisation selon l'une des revendications 1 à 3, caractérisé en ce que le moyen élastique est formé par une lame-ressort (6") en forme générale de lyre traversée par la vis (5') dans une partie centrale et comportant deux branches généralement parallèles dont des parties d'extrémité sont accrochées sur le socle.

10. Feu de signalisation selon l'une des revendications 7 à 9, caractérisé en ce que le moyen de vissage comprend une vis (5') associée à un écrou (55) et à un contre-écrou (54) situés de part et d'autre d'une autre paroi (2) du véhicule, et en ce que le contre-écrou (54) forme butée de vissage de l'écrou.

11. Feu de signalisation selon la revendication 10, caractérisé en ce que la lame-ressort comporte des aménagements pour bloquer la rotation d'une tête (51) de ladite vis (5').

12. Feu de signalisation selon l'une des revendications 7 à 9, caractérisé en ce que le moyen de vissage comprend une vis (5") comportant une première partie filetée (52a) coopérant avec une autre paroi (2) du véhicule pour former une butée de vissage, et une seconde partie filetée (52b), de plus petit diamètre, traversant la lame-ressort.

13. Feu de signalisation selon l'une des revendications 7 à 12, caractérisé en ce que le socle du feu comprend des pattes flexibles (37a, 37b) à dents (38a, 38b) en saillie vers l'arrière et définissant les moyens de prépositionnement et/ou de prémaintien du feu avant vissage.

## Patentansprüche

1. Signalleuchte für Kraftfahrzeuge, umfassend
- einen Sockel (33), der eine Lichtquelle (34) enthält und durch eine Abdeckscheibe (31) verschlossen ist, wobei die Leuchte durch eine Randleiste (37) am Rand einer in einer starren Wand (1) des Fahrzeugs ausgebildeten Öffnung zur Anlage kommt, und
- ein Schraubbefestigungsmittel (5, 4; 5', 54, 55), das in Höhe des Sockels (33) wirkt, um die besagte Randleiste an den besagten Rand anzupressen, und
- ein elastisches Mittel (6; 6'), das zwischen dem Schraubbefestigungsmittel und dem Sockel wirksam ist, um die an die Leuchte übertragenen Beanspruchungen zu begrenzen,
**dadurch gekennzeichnet**, daß
das Schraubbefestigungsmittel ein als Schraubanschlag dienendes Mittel (4; 54) umfaßt, um die Ausübung zu starker Beanspruchungen auf die Leuchte beim Verschrauben des Befestigungsmittels zu verhindern.

2. Signalleuchte nach Anspruch 1, **dadurch gekennzeichnet**, daß eine Dichtung (12) zwischen dem Rand der Öffnung und der Randleiste der Leuchte eingefügt ist.

3. Signalleuchte nach einem der Ansprüche 1 und 2, **dadurch gekennzeichnet**, daß sie Mittel (37a, 37b) zur Vorpositionierung und/oder Vorhalterung der Leuchte vor der Anwendung des Schraubmittels umfaßt.

4. Signalleuchte nach einem der Ansprüche 1 bis 3, **dadurch gekennzeichnet**, daß das Schraubbefestigungsmittel eine Schraube (5) und eine Gewindehülse (4) umfaßt, die beiderseits einer anderen Wand (22) des Fahrzeugs angeordnet sind, wobei die Schraube durch eine in der besagten anderen Wand ausgebildete Öffnung hindurchgeht, daß die besagte Gewindehülse einen Schraubanschlag bildet und daß das elastische Mittel durch eine Druckfeder (6) gebildet wird, die zwischen einem auf der Gewindehülse ausgebildeten ersten Auflagebereich (41) und einem fest mit dem Sockel (33) der Leuchte verbundenen zweiten Auflagebereich (36) eingefügt ist.

5. Signalleuchte nach Anspruch 4, **dadurch gekennzeichnet**, daß der Sockel einstückig eine Verlängerung umfaßt, von der ein erster Teil (35) mit der Gewindehülse (4) zusammenwirkt, um ihre Verdrehung zu verhindern, und von der ein zweiter Teil (36) den besagten zweiten Auflagebereich bildet.

6. Signalleuchte nach einem der Ansprüche 4 und 5, **dadurch gekennzeichnet**, daß der besagte erste Auflagebereich der Feder (6) durch einen einstückig mit der Gewindehülse (4) ausgeführten Kragen (41) gebildet wird, wobei die Feder um die Gewindehülse herum angeordnet ist.

7. Signalleuchte nach einem der Ansprüche 1 bis 3, **dadurch gekennzeichnet**, daß das elastische Mittel durch ein langgestrecktes Federblatt (6') gebildet wird, durch das die Schraube (5') in einem Mittelteil hindurchgeht und das am Sockel in einem der Endteile anliegt.

8. Signalleuchte nach Anspruch 7, **dadurch gekennzeichnet**, daß die Endteile des Federblatts Mittel zur Befestigung am Sockel besitzen.

9. Signalleuchte nach einem der Ansprüche 1 bis 3, **dadurch gekennzeichnet**, daß das elastische Mittel aus einem allgemein leierförmigen Federblatt (6") besteht, durch das die Schraube (5') in einem Mittelteil hindurchgeht und das zwei allgemein parallele Schenkel aufweist, deren Endteile am Sockel befestigt sind.

10. Signalleuchte nach einem der Ansprüche 7 bis 9, **dadurch gekennzeichnet**, daß das Schraubmittel eine Schraube (5') umfaßt, die mit einer Mutter (55) und einer Gegenmutter (54) verbunden ist, die sich beiderseits einer anderen Wand (2) des Fahrzeugs befinden, und daß die Gegenmutter (54) einen Schraubanschlag für die Mutter bildet.

11. Signalleuchte nach Anspruch 10, **dadurch gekennzeichnet**, daß das Federblatt Anordnungen umfaßt, um einen Kopf (51) der besagten Schraube (5') gegen Verdrehung zu sichern.

12. Signalleuchte nach einem der Ansprüche 7 bis 9, **dadurch gekennzeichnet**, daß das Schraubmittel eine Schraube (5") enthält, die einen ersten Gewindeteil (52a), der mit einer anderen Wand (2) des Fahrzeugs zusammenwirkt, um einen Schraubanschlag zu bilden, und einen zweiten Gewindeteil (52b) mit kleinerem Durchmesser umfaßt, der durch das Federblatt hindurchgeht.

13. Signalleuchte nach einem der Ansprüche 7 bis 12, **dadurch gekennzeichnet**, daß der Sockel der Leuchte biegsame Ansätze (37a, 37b) mit Zähnen (38a, 38b) umfaßt, die nach hinten vorstehen und die Mittel zur Vorpositionierung und/oder Vorhalterung der Leuchte vor dem Verschrauben bilden.

## Claims

1. An indicating light unit (3) for a motor vehicle, of the type comprising
- a base member (33) containing a light source (34) within it and closed by a lens (31), the light unit being engaged, through a flange (37), against the edge of the aperture formed in a rigid wall (1) of the vehicle, and
- a screw fastening means (5, 4; 5', 54, 55) arranged in the region of the base member (33) to press the said flange against the said edge, and
- a resilient means (6, 6') operating between the screw fastening means and the base member for limiting forces transmitted to the light unit,
characterised in that the screw fastening means comprises a means (4; 54) defining a screw fastening abutment for preventing the application of excessive forces to the light unit while the fastening means is being screwed up.

2. An indicating light unit according to Claim 1, characterised in that a sealing member (12) is interposed between the edge of the aperture and the flange of the light unit.

3. An indicating light unit according to Claim 1 or Claim 2, characterised in that it includes means (37a, 37b) for positioning and/or holding the light unit before the screw fastening means is made effective.

4. An indicating light unit according to one of Claims 1 to 3, characterised in that the screw fastening means comprise a screw (5) and a threaded sleeve (4) which are disposed on either side of a further wall (22) of the vehicle, with the screw extending through an aperture formed in the said further wall, in that the said sleeve (4) constitutes the screw fastening abutment, and in that the resilient means consists of a compression spring (6) interposed between a first engagement zone (41) formed on the sleeve and a second engagement zone (36) fixed with respect to the base member (33) of the light unit.

5. An indicating light unit according to Claim 4, characterised in that the base member includes an integral extension, a first portion (35) of which cooperates with the sleeve (4) for preventing its rotation, with a second portion (36) of the extension constituting the said second engagement zone.

6. An indicating light unit according to Claim 4 or Claim 5, characterised in chat the said first engagement zone for the spring (6) is defined by a collar element integral with the sleeve (4), the spring being disposed around the sleeve.

7. An indicating light unit according to one of Claims 1 to 3, characterised in that the resilient means consists of an elongate leaf spring (6'), with the screw (5') extending through a central portion thereof, the screw being in engagement against the base member in end portions.

8. An indicating light unit according to Claim 7, characterised in that the end portions of the leaf spring include means for hooking them on the base member.

9. An indicating light unit according to one of Claims 1 to 3, characterised in that the resilient means consists of a generally lyre-shaped leaf spring (6"), with the screw (5') extending through a central portion thereof, the spring comprising two generally parallel branches, the end portions of which are hooked on the base member.

10. An indicating light unit according to one of Claims 7 to 9, characterised in that the screw fastening means comprise a screw (5') associated with a nut (55) and a locking nut (54), the nuts being on either side of another wall (2) of the vehicle, and in that the locking nut (54) defines a screw fastening abutment for the nut.

11. An indicating light unit according to Claim 10, characterised in that the leaf spring includes means for preventing rotation of a head (51) of the said screw (5').

12. An indicating light unit according to one of Claims 7 to 9, characterised in that the screw fastening means consists of a screw (5") which comprises a threaded first portion (52a) cooperating with another wall (2) of the vehicle to define a screw fastening abutment, and a threaded second portion (52b) of smaller diameter, which extends through the leaf spring.

13. An indicating light unit according to one of Claims 7 to 12, characterised in that the base member of the light unit includes flexible lugs (37a, 37b) having teeth (38a, 38b), projecting towards the rear and defining means for positioning and/or holding the light unit in place before screw fastening is effected.
